(19) European Patent Office

Europäisches Patentamt

European Patent Office

Office européen des brevets

(11) **EP 1 052 629 A1**

## (12) EUROPEAN PATENT APPLICATION

(43) Date of publication:
**15.11.2000 Bulletin 2000/46**

(51) Int. Cl.⁷: **G11B 7/24**

(21) Application number: **00109895.3**

(22) Date of filing: **10.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.05.1999 JP 13336199**

(71) Applicant: **SONY CORPORATION Tokyo (JP)**

(72) Inventors:
- **Furuki, Motohiro**
  **Shinagawa-ku, Tokyo (JP)**
- **Yukumoto, Tomomi**
  **Shinagawa-ku, Tokyo (JP)**
- **Yamasaki, Takeshi**
  **Shinagawa-ku, Tokyo (JP)**

(74) Representative:
**MÜLLER & HOFFMANN Patentanwälte**
**Innere Wiener Strasse 17**
**81667 München (DE)**

### (54) Optical recording medium

(57) An optical recording medium prohibiting the grazing or deformation from being produced on its light transmitting layer to assure optimum recording and/or reproduction. The optical recording medium includes a substrate, 0.3 mm to 1.2 mm in thickness, and a light transmitting layer, 3 μm to 177 μm in thickness, bonded on the recording layer. The information may be record and/or reproduce by irradiating the light from the side of the light transmitting layer. The surface of the light transmitting layer is surface-processed with a view to increasing the hardness, reducing the frictional coefficient and to prevention of electrification. The surface-processed light transmitting layer has a hardness not less than 13 MHz in terms of Vickers hardness. Alternatively, the surface-processed light transmitting layer has a hardness not less than 0.5 GPa and a Young's modulus not less than 4 GPa as measured by the nano-indentation method.

FIG.1

EP 1 052 629 A1

## Description

BACKGROUND OF THE INVENTION

Field of the Invention

This invention relates to an optical recording medium in which a light transmitting layer of a thin thickness is bonded to a recording layer on a substrate and in which light is irradiated from the side of the light transmitting layer to record and/or reproduce the information.

Description of Related Art

In an optical disc, such as the-called compact disc (CD), light is irradiated from the side of a transparent substrate, 1.2 mm in thickness, to read out the signals. The transparent substrate is formed of a transparent thermoplastic resin and has pits formed on its surface. That is, the optical disc includes a light transmitting layer, 1.2 mm in thickness, with pits being formed on its bottom surface.

In such case, the reproducing spot diameter φ of the playback light irradiated is represented by the following formula:

$$\varphi = 1.22 \times \lambda/N$$

where $\lambda$ is the playback light wavelength and NA is the numerical aperture of a lens.

With the playback light wavelength of 780 nm and the numerical aperture of a lens NA of 0.45, for example, the playback light spot diameter is approximately 2.1 μm. Since the spot diameter on the surface of the light transmitting layer 1.2 mm in thickness is approximately 715 μm, the playback light is not obstructed, while errors produced can be corrected, in a majority of cases, even if the dust affixture or grazing has occurred on the surface of the light transmitting layer.

There is also proposed, as an optical recording medium that is able to realize recording to an outstandingly higher density than with the CD, such an optical recording medium having a light transmitting layer in the form of a sheet 3 to 177 μm in thickness and which is adapted to irradiate the light from the side of this sheet-like light transmitting layer.

In this optical recording medium, in which the light transmitting layer is extremely thin in comparison with the conventional transparent substrate, obstruction of the recording and/or reproducing light by dust deposition, or grazing produced by collision against the optical pickup or by sandwiching the affixed dust between an optical pickup and the light transmitting layer, presents serious problems.

If, with the recording and/or reproducing wavelength $\lambda$ =515 nm, the numerical aperture of an objective lens of an optical pickup NA = 0.85 and the refractive index of the light transmitting layer n = 1.58, the playback spot diameter and the spot diameter on the surface of the light transmitting layer are estimated for the light transmitting layer with a thickness of 100 μm, the playback spot diameter is approximately 0.74 μm, whereas the spot diameter on the surface of the light transmitting layer is approximately 130 μm. Since the spot area on the surface of the light transmitting layer is approximately 1/30 of that with the CD, and approaches to the size of the dust and dirt encountered in our everyday life, sufficient attention must be paid to deposition of dust and dirt or scratches with this sort of the optical recording medium.

It has hitherto been recognized that a transparent substrate formed of polycarbonate tends to be grazed on collision with an optical pickup. In an optical recording medium in which light is irradiated from the side of the light transmitting layer of reduced thickness, an optical pickup with a NA as high as 0.85 is used, and the distance between the light transmitting layer and the optical pickup (working distance) is set to not larger than 300 μm, the grazing due to collision or to sandwiching of dust and dirt between the optical pickup and the light transmitting layer tends to occur more significantly than with the conventional optical recording medium. Therefore, if a tetrafluoroethylene based material is used as a housing material for an optical pickup, and collision is produced at 20 Hz at a linear velocity of 5 m/sec, tracking servo is in trouble on occurrence of approximately 100 collisions to render error correction during readout impossible. In actuality, concentric grazing was observed to have occurred on the surface of the polycarbonate sheet.

SUMMARY OF THE INVENTION

It is therefore an object of the present invention to provide an optical recording medium in which the light transmitting layer may be prohibited from being grazed or deformed to cause no hindrance in recording and/or reproduction.

It is another object of the present invention to provide an optical recording medium which is superior in production efficiency and in mass-producibility.

The present inventors have conducted various researches, and found that, by surface-processing the light transmitting layer at the outset with a view to increasing surface hardness, reducing the frictional coefficient and to preventing the electrification, it is possible to realize recording and/or reproduction within the range of error correction despite the occurrence of collision of the optical recording medium against the optical pickup. The present inventors have also found that, by measuring the surface hardness of the light transmitting layer by the micro-Vickers hardness method or by the nano-indentation method, it is possible to quantitate the hardness that is able to stand the collision against the optical pickup.

The present invention has been completed based on this information and provides a support having a thickness of 0.3 mm to 1.2 mm, a recording layer provided on the support and a light transmitting layer provided on the recording layer 3 μm to 177 μm in thickness. The information is recorded and/or reproduced by the light being irradiated from the side of the light transmitting layer having a surface-processed surface.

Preferably, the light transmitting layer has a hardness not less than 13 HMV in terms of the Vickers hardness and a hardness not less than 0.5 GPa as measured by the nano-indentation method or a Young's modulus not less than 4 GPa as measured by the nano-indentation method.

By the surface-processing, the surface of the light transmitting layer is prohibited from being damaged or deformed to assure recording and/or reproduction of high reliability.

That is, according to the present invention the light transmitting layer is not damaged or deformed even on collision of the optical pickup against the light transmitting layer to assure recording and/or reproduction within the range of error correction.

Moreover, according to the present invention, since a surface-processed sheet is used, the disc surface processing step after disc fabrication, which is to be performed from one completed disc to another, can be omitted, thus improving production efficiency.

BRIEF DESCRIPTION OF THE DRAWINGS

Fig. 1 is a schematic cross-sectional view showing an illustrative structure of an optical disc embodying the present invention.
Fig.2 is a schematic view showing an overall structure of a measurement device used in the measurement by the nano-indentation method.
Fig.3 is a graph showing the load-displacement curve as measured by the nano-indentation method.

DESCRIPTION OF THE PREFERRED EMBODIMENTS

Referring to the drawings, an optical recording medium according to the present invention will be explained in detail.

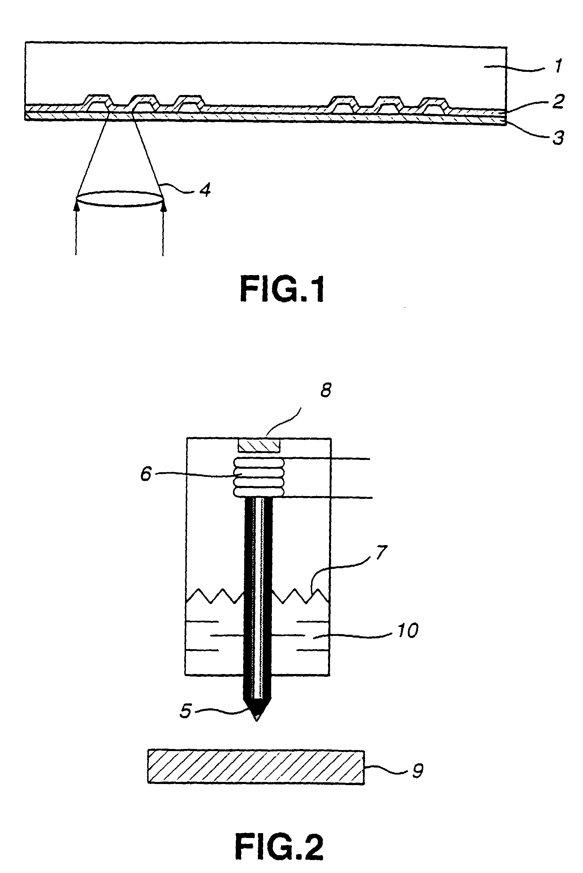

Fig. 1 shows an example of an optical recording medium embodying the present invention. In the optical recording medium, a recording layer 2 is formed on a supporting substrate 1 and a light transmitting layer 3 is bonded thereon to overlie the recording layer 2. The information is written or read out from the side of the light transmitting layer 3 so that the optical pickup 4 is arranged facing the light transmitting layer 3.

As the recording layer 2, any suitable recording layer known to be usable as the recording layer of the optical recording medium may be used. For example, at least one of a reflective film, a phase-change recording film, a photomagnetic recording film and an organic dye recording film, is formed as the recording layer 2.

The supporting substrate 1 is a molded article of e.g., thermoplastic resin, and has fine phase pits or guide grooves formed on its surface, on which the recording layer 2 is formed as appropriate.

The light transmitting layer 3 is a thin polycarbonate sheet and has its thickness set to 3 to 177 μm at least in its recording area. By reducing the thickness of the light transmitting layer 3, a high NA optical pickup can be used to enable high density recording.

It is a characteristic of the present invention to use a sheet surface-processed at the outset as the sheet of the light transmitting layer 3 in order to realize at least one of the increase in surface hardness, reduction in the frictional coefficient and prevention of electrification.

The surface hardness may be increased by using, as the sheet of the light transmitting layer 3, a sheet on which at least one of Si oxide, Si nitride, Si carbide, mixture of Si oxide and Si nitride, and hard carbon is formed previously, or a sheet the on surface of which a liquid light curable resin or a liquid thermohardening resin has been coated and cured.

Preferably, the surface hardness of the light transmitting layer 3 has a Vickers hardness not less than 13 HMV, a hardness as measured by the nano-indentation method of not less than 0.5 GPa or a Young's modulus not less than 4 GPa.

With the micro-Vickers hardness testing method, a diamond presser (micro-Vickers presser) is pressed into the surface of a sample to measure the hardness of the sample. Using a diamond presser in the form of a tetragonal pyramid, with a diagonal surface of 136°, in terms of a thrusting hardness, a pyramid-shaped indentation is formed in the test surface. The load at this time is divided by the surface area as found from the mean length of the diagonal lines of the indentation. The destruction tenacity can be found by measuring the length of a crack produced at this time, while the toughness affording mechanism can be known by observing the interaction between the crack and the fine texture.

The present method has a feature that a small test piece suffices in conducting the test in measuring the hardness or tenacity.

It is however difficult to realize accurate measurement of the hardness of an inorganic film-like material, with a thickness not larger than 1 μm, obtained on film-forming by vapor deposition or sputtering. The reason therefor is that the underlying layer operates as an influencing factor, and that, when the presser is forced into the bulk of the sample material, the thin film is cracked to render it impossible to effect accurate measurement of the diagonal line of the indentation.

On the other hand, the nano-indentation method is a method whereby the load and the displacement during the deformation process can be measured accurately as a small-sized diamond presser is forced into the bulk of the thin film. This method is being used for measuring the hardness or the modulus of elasticity of the thin film or investigating into the destruction behavior. It is noted however that the sample measurement is to be conducted at room temperature because the sample is contacted with the presser.

Fig.2 shows a typical measurement device by the nano-indentation method. This measurement device includes an electro-magnet 6, mounted on the proximal end of a diamond presser 5, and which is supported by a spring 7. At back of the diamond presser 5 is arranged a magnet 8. The load of the diamond presser 5 on the sample 9 is determined by the interaction between the magnet 8 and the electro-magnet 6 for load.

At a mid portion of the diamond presser 5 is mounted a capacitance displacement meter 10 adapted for measuring the displacement of the diamond presser 5.

In the above measurement device, load addition is by exploiting the electro-magnetic induction or the piezoelectric effect. The load value is determined by reading out the current value and by the load cell in the former and latter cases, respectively. The load used for experimentation is usually of an mN order, with the resolution being approximately 1 $\mu$m. The displacement is determined with the resolution of approximately 0.2 mN by measuring changes in capacitance.

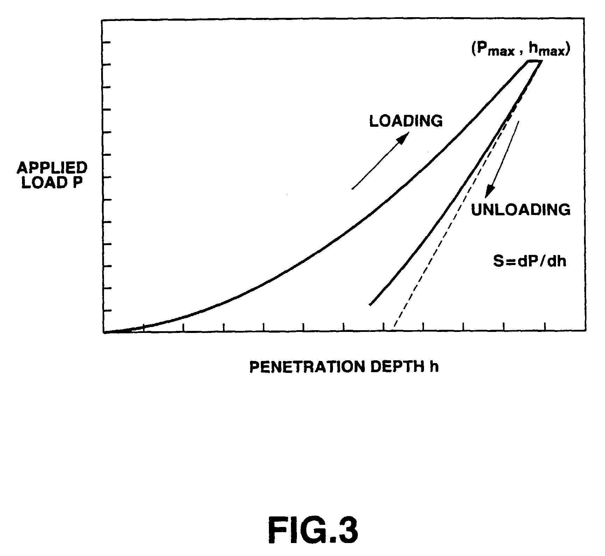

Fig.3 shows a graph showing a typical load-displacement curve, as obtained by the nano-indentation method. Since the deformation behavior accompanying the forcing of the presser is complex, it is not possible to analyze the obtained curve in its entirety. However, it is possible to derive the modulus of elasticity and hardness from data in the vicinity of the maximum load (Pmax).

Assuming that the deformation at the initial stage of unloading is the elastic deformation, the elastic constant $E_{eff}$ is related to the gradient S of a tangent drawn to the curve at the maximum load $P_{max}$ by

$$S = \frac{2}{\sqrt{\pi}} \cdot \beta \cdot \sqrt{A} \cdot E_{eff}$$

On the other hand, the hardness is derived from the well-known following relationship:

$$H = P_{max}/A$$

where

$\beta$ is the dimensionless factor dependent on the presser shape;

A is the contact area of the presser; and

$E_{eff}$ is the elastic constant.

It is noted that, in the case of a Berkovich presser, $\beta$ and A are given by the following equation:

$$\beta = 1.034$$

where

$$A = 24.5 \, h_c^2 \text{ and}$$

$$h_c = h_{max} - 0.75 \cdot P_{max}/S.$$

On the other hand, the Young's modulus $E_f$ of the thin film may be derived from the measured value of the elastic constant $E_{eff}$ by the following equation:

$$1/E_{eff} = (1 - V_f^2)E_f + (1 - v_{indenter}^2)/E_{indenter}$$

which takes the presser deformation into account. In the above equation, $V_{indenter} = 0.07$ and $E_{indenter} = 1141$GPa.

It should be noted that, in the nano-indentation method, attention should be paid in the experimentation to the fact that, should the presser be forced to an excessive depth, the interface or the substrate operates as an influencing factor. The results of an experiment on an Al thin film on an Si substrate and calculations employing an infinite element method indicate that, if the presser depth is not larger than 1/10 to 1/5 of the film thickness, the effect of the substrate can be overlooked. This value is used as a measure in other thin films.

According to the present invention, it is possible to use a sheet surface-processed at the outset as the light transmitting layer 3 with a view not only to increasing the surface hardness but also to reduction of the frictional coefficient and to preventing the electrification. For the former purpose, surface processing is carried out by coating e.g., silicone oil at the outset, whereas, for the later purpose, surface processing is carried out by coating at least one of cationic surfactant and the amphoteric surfactant.

Examples

The present invention will now be explained with reference to specified Examples.

Example 1

A polycarbonate sheet, 100 $\mu$m thick, coated at the outset with a liquid photocurable resin, to a thick-

ness of 2 μm, was punched to a disc shape, and bonded to an optical disc supporting substrate, 1.2 mm thick, using a liquid photocurable resin, as an adhesive, to fabricate a high density optical disc.

This liquid photocurable resin had a Vickers hardness of 40 HMV, which was improved to approximately thrice that on the surface of a non-processed polycarbonate substrate.

As a result, the risk of the light transmitting layer being damaged could be lowered even if contamination of higher hardness such as sand or dust is affixed to the disc surface and sandwiched between the optical pickup and the light transmitting layer.

Example 2

A polycarbonate sheet, 100 μm thick, on which $SiO_x$ ($1 \leq x \leq 2$) was formed to a thickness of 80 nm by sputtering, was punched to a disc shape, and bonded to an optical disc supporting substrate, 1.2 mm thick, using a liquid photocurable resin, as an adhesive, to fabricate a high density optical disc.

The surface hardness and the Young's modulus, as measured using a nano-indentation method, as a thin film hardness measurement method, by a nano-indicator II, a trade name of a product manufactured by NANO-INSTRUMENTS INC., were approximately 2 GPa and approximately 17 GPa, respectively. Since the surface hardness and the Young's modulus of an unprocessed polycarbonate sheet were approximately 0.3 GPa and approximately 4 GPa, respectively, it may be seen that the high-density optical disc is desirably improved in surface hardness.

Moreover, the dynamic frictional coefficient on the disc surface can desirably be reduced from 0.25 to 0.15 as a result of formation of an SiOx film.

The dynamic frictional coefficient was measured using HEIDON 22, a trade name of a measurement device manufactured by SHINTO KAGAKU SHA CO. LTD. under the measurement condition of a load of 20 gf and a measurement speed of 60 mm/min, using a stainless steel (SUS) ball 10 mm in diameter.

As a result of the reduction in the frictional coefficient, the number of scratches on the optical disc medium, produced on contact of the optical pickup with the light transmitting layer, could be diminished.

Example 3

A polycarbonate sheet, 100 μm thick, on which $Si_3N_4$ was formed to a thickness of 150 nm by sputtering, was punched to a disc shape, and bonded to an optical disc supporting substrate, 1.2 mm thick, using a liquid photocurable resin, as an adhesive, to fabricate a high density optical disc.

The surface hardness and the Young's modulus, as measured using a nano-indentation method, as a thin film hardness measurement method, by a NANO-INDICATOR II, a trade name of a product manufactured by NANO-INSTRUMENTS INC., were approximately 4 GPa and approximately 28 GPa, respectively. Since the surface hardness and the Young's modulus of an unprocessed polycarbonate sheet were approximately 0.3 GPa and approximately 4 GPa, respectively, it may be seen that the high-density optical disc is desirably improved in surface hardness.

Moreover, the dynamic frictional coefficient on the disc surface can desirably be reduced from 0.25 to 0.18 as a result of formation of an $SiO_x$ ($1 \leq x \leq 2$) film.

The dynamic frictional coefficient was measured using HEIDON 22, a trade name of a measurement device manufactured by SHINTO KAGAKU SHA CO. LTD. under the measurement condition of a load of 20 gf and a measurement speed of 60 mm/min, using a stainless steel (SUS) ball 10 mm in diameter.

As a result of the reduction in the frictional coefficient, the number of scratches on the optical disc medium, produced on contact of the optical pickup with the light transmitting layer, could be diminished. Even when the optical pickup was caused to impinge on the disc 1000 times at a line velocity of 5m/sec and 20 Hz, the readout error frequency in the area was not increased, in marked distinction from the optical disc employing an unprocessed polycarbonate sheet, susceptible to an increased error correction frequency, as a light transmitting layer. By forming an $Si_3N_4$ film on the polycarbonate sheet, there was no problem caused in readout even on collision of the disc with the optical pickup.

Example 4

A cationic surface modifier IN-177B, manufactured by TAKAMATSU YUSHI CO. LTD., was applied on a polycarbonate sheet, 100 μm in thickness, dried with hot air at 100°C and heat-treated at 120°C for three minutes to coat the surface modifier to a thickness of 1 μm on the polycarbonate sheet.

The polycarbonate sheet, on which the cationic surface modifier was pre-coated to a thickness of 1 μm, was punched to a disc shape, and bonded to an optical disc supporting substrate, 1.2 mm thick, using a liquid photocurable resin, as an adhesive, to fabricate a high density optical disc.

As a result, the surface resistance value was lowered from $10^{15}$ Ω/cm$^2$ to $10^7$ Ωcm$^2$, as measured under the measurement conditions of 20°C and 30 RH%, this indicating that the amount of adhesion on the light transmitting layer by static charges could be diminished.

Example 5

A polycarbonate sheet, 100 μm in thickness, was punched to a disc shape, and bonded to an optical disc supporting substrate, 1.2 mm in thickness, using a liquid photocurable resin as an adhesive. On this polycarbonate sheet was top-coated silicone oil manufactured by SHIN-ETSU KAGAKU KOGYO SHA CO. LTD. under the trade name of KF-96, by a stamp system, to fabricate a high density optical disc.

As a result, the optical disc was improved in surface lubricity, with the dynamic frictional coefficient now being decreased from 0.26 to 0.08. The dynamic frictional coefficient was measured by HEIDON 22 manufactured by SHINTO KAGAKU SHA CO. LTD. using a 10 mm stainless steel (SUS) ball under a load of 20 gf and a measurement speed of 60 mm/min.

In this manner, surface loss or deterioration of the light transmitting layer on its collision against an optical pickup could be reduced.

## Claims

1. An optical recording medium comprising:

    a support having a thickness of 0.3 mm to 1.2 mm;

    a recording layer provided on said support; and

    a light transmitting layer provided on said recording layer, said light transmitting layer being 3 μm to 177 μm in thickness and having its surface cured;
    wherein

    the information is recorded and/or reproduced by the light being irradiated from the side of the light transmitting layer.

2. The optical recording medium according to claim 1 wherein

    said light transmitting layer is a sheet bonded to said recording layer.

3. The optical recording medium according to claim 1 wherein

    said light transmitting layer has a surface hardness not less than 13 HMV in terms of Vickers hardness.

4. The optical recording medium according to claim 1 wherein

    said light transmitting layer has a surface hardness not less than 0.5 GPa as measured by the nano-indentation method.

5. The optical recording medium according to claim 1 wherein

    said light transmitting layer has the Young's modulus not less than 4 GPa as measured by the nano-indentation method.

6. The optical recording medium according to claim 2 wherein

    a liquid photocurable resin or a liquid heat-curable resin is pre-coated and cured on the surface of said sheet.

7. The optical recording medium according to claim 2 wherein

    at least one of Si oxide, Si nitride, Si carbide, mixture of Si oxide and Si nitride, and hard carbon is pre-formed on said sheet.

8. An optical recording medium comprising:

    a support having a thickness of 0.3 mm to 1.2 mm;

    a recording layer provided on said support; and

    a light transmitting layer provided on said recording layer, said light transmitting layer being 3 μm to 177 μm in thickness and having its surface processed for electrification prevention;
    wherein

    the information is recorded and/or reproduced by the light being irradiated from the side of the light transmitting layer.

9. The optical recording medium according to claim 8 wherein

    at least one of a cationic surfactant and an amphoteric surfactant is coated on the surface of said light transmitting layer.

10. An optical recording medium comprising:

    a support having a thickness of 0.3 mm to 1.2 mm;

    a recording layer provided on said support; and

    a light transmitting layer provided on said recording layer, said light transmitting layer being 3 μm to 177 μm in thickness and having its surface processed for frictional coefficient reduction;
    wherein

    the information is recorded and/or reproduced by the light being irradiated from the side of the light transmitting layer.

**11.** The optical recording medium according to claim 10 wherein

a silicon oil is coated on the surface of said light transmitting layer.

## FIG.1

## FIG.2

8

$(P_{max} , h_{max})$

LOADING

APPLIED
LOAD P

UNLOADING

$S = dP/dh$

PENETRATION DEPTH h

# FIG.3

EP 1 052 629 A1

**European Patent Office**

**EUROPEAN SEARCH REPORT**

Application Number

EP 00 10 9895

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | US 6 063 468 A (ARATANI KATSUHISA ET AL) 16 May 2000 (2000-05-16) * the whole document * | 1,2,4-11 | G11B7/24 |
| X | -& JP 10 302309 A (SONY) 13 November 1998 (1998-11-13) | 1,2,6-8, 10,11 | |
| Y | | 3-5 | |
| X | EP 0 729 141 A (SONY CORP ;SONY DISC TECHNOLOGY INC (JP)) 28 August 1996 (1996-08-28) * column 5, line 22 - column 7, line 53 * | 1,2,6 | |
| X | PATENT ABSTRACTS OF JAPAN vol. 1999, no. 05, 31 May 1999 (1999-05-31) & JP 11 031337 A (SONY CORP), 2 February 1999 (1999-02-02) | 1,2,4,5, 7 | |
| A | * abstract * | 6 | |
| X | EP 0 843 306 A (KAO CORP) 20 May 1998 (1998-05-20) * page 3, line 25 - page 4, line 46 * | 1,8,9 | |
| | | | TECHNICAL FIELDS SEARCHED (Int.Cl.7) |
| | | | G11B |
| Y | WO 98 10115 A (MONSANTO CO) 12 March 1998 (1998-03-12) * page 2, line 10 - page 4, line 2 * * page 6, line 16 - line 21 * * example 11 * | 3-5 | |
| A | US 5 846 649 A (DANIELS BRIAN KENNETH ET AL) 8 December 1998 (1998-12-08) * abstract * * column 3, line 35 - line 62 * * column 11, line 54 - line 60 * * column 8, line 7 - column 9, line 46 * | 1-5,7 | |

-/--

The present search report has been drawn up for all claims

| Place of search | Date of completion of the search | Examiner |
|---|---|---|
| BERLIN | 17 August 2000 | Quaranta, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## EUROPEAN SEARCH REPORT

European Patent Office

Application Number

EP 00 10 9895

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 190 807 A (KIMOCK FRED M ET AL) 2 March 1993 (1993-03-02) * column 4, line 49 - column 6, line 5 * * column 11, line 13 - column 12, line 50 * | 1,4-6 | |
| | ----- | | |
| | | | TECHNICAL FIELDS SEARCHED (Int.Cl.7) |

The present search report has been drawn up for all claims

| Place of search | Date of completion of the search | Examiner |
|---|---|---|
| BERLIN | 17 August 2000 | Quaranta, L |

## ANNEX TO THE EUROPEAN SEARCH REPORT
## ON EUROPEAN PATENT APPLICATION NO.

EP 00 10 9895

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2000

| Patent document cited in search report | | Publication date | Patent family member(s) | | Publication date |
|---|---|---|---|---|---|
| US 6063468 | A | 16-05-2000 | JP | 10302309 A | 13-11-1998 |
| EP 0729141 | A | 28-08-1996 | JP | 8235638 A | 13-09-1996 |
| | | | AU | 4562196 A | 05-09-1996 |
| | | | BR | 9600794 A | 23-12-1997 |
| | | | CA | 2170115 A | 25-08-1996 |
| | | | CN | 1141479 A | 29-01-1997 |
| | | | EP | 0992989 A | 12-04-2000 |
| | | | SG | 52566 A | 28-09-1998 |
| | | | US | 5846626 A | 08-12-1998 |
| JP 11031337 | A | 02-02-1999 | NONE | | |
| EP 0843306 | A | 20-05-1998 | US | 6077582 A | 20-06-2000 |
| | | | WO | 9747004 A | 11-12-1997 |
| WO 9810115 | A | 12-03-1998 | NONE | | |
| US 5846649 | A | 08-12-1998 | US | 5508368 A | 16-04-1996 |
| | | | US | 5618619 A | 08-04-1997 |
| | | | US | 6077569 A | 20-06-2000 |
| | | | WO | 9738850 A | 23-10-1997 |
| | | | CA | 2184738 A | 08-09-1995 |
| | | | EP | 0748260 A | 18-12-1996 |
| | | | JP | 10500633 T | 20-01-1998 |
| | | | WO | 9523652 A | 08-09-1995 |
| | | | US | 5888593 A | 30-03-1999 |
| | | | CA | 2184736 A | 14-09-1995 |
| | | | EP | 0748259 A | 18-12-1996 |
| | | | JP | 10500609 T | 20-01-1998 |
| | | | WO | 9524275 A | 14-09-1995 |
| | | | US | 5679413 A | 21-10-1997 |
| US 5190807 | A | 02-03-1993 | CA | 2090110 A | 19-04-1992 |
| | | | EP | 0553161 A | 04-08-1993 |
| | | | JP | 6501894 T | 03-03-1994 |
| | | | WO | 9206843 A | 30-04-1992 |

For more details about this annex : see Official Journal of the European Patent Office, No. 12/82